Europäisches Patentamt

European Patent Office

Office européen des brevets

(19)

(11) Numéro de publication: **0 094 289**
**B1**

(12) # FASCICULE DE BREVET EUROPEEN

(45) Date de publication du fascicule du brevet:
**10.12.86**

(21) Numéro de dépôt: **83400852.6**

(22) Date de dépôt: **28.04.83**

(51) Int. Cl.⁴: **A 23 C 19/032** // C12N9/52

(54) **Procédé destiné à améliorer l'aptitude fromagère du lait entrant dans la préparation des fromages à pâtes pressées non cuites ou demi-cuites et fromages obtenus par ce procédé.**

(30) Priorité: **30.04.82 FR 8207484**

(43) Date de publication de la demande:
**16.11.83 Bulletin 83/46**

(45) Mention de la délivrance du brevet:
**10.12.86 Bulletin 86/50**

(84) Etats contractants désignés:
**AT BE CH DE FR GB IT LI NL SE**

(56) Documents cités:
**US - A - 3 156 568**

**CHEMICAL ABSTRACTS, vol. 62, no. 11, 24 mai 1965, colonne no. 13765c, Columbus, Ohio, USA, S. POZNANSKI et al.: "Proteolysis during the ripening of Edam cheese with the participation of some bacteria strains"**
**CHEMICAL ABSTRACTS, vol. 70, 1969, page 23, no. 111743j, Columbus, Ohio, USA, M. DESMAZEAUD et al.: "Isolation, purification, and properties of an extra-cellular protease from Micrococcus caseolyticus"**
**LE LAIT, vol. 52, nos. 519-520, novembre-décembre 1972, pages 629-641, FR, M. FEUILLAT et al.: "Importance de la protéolyse du lait sur la croissance des bactéries lactiques. Utilisation d'une souche de**

(73) Titulaire: **ROUSSEL-UCLAF, 35, boulevard des Invalides, F-75007 Paris (FR)**

(72) Inventeur: **Barthelemy, Pierre, Rue de Chamicy Rully, F-60810 Barbery (FR)**
Inventeur: **Desmazeaud, Michel, 2, Avenue Beauséjour, F-91440 Bures sur Yvette (FR)**

(74) Mandataire: **Vieillefosse, Jean-Claude et al, Département des Brevets ROUSSEL UCLAF B.P no 9, F-93230 Romainville (FR)**

(56) Documents cités: (suite)
**microcoque caséolytique en vue de la maturation et de la transformation du lait en fromagerie de gruyère"**
**JOURNAL OF DAIRY SCIENCE, vol. 54, no. 1, 1973, pages 33-38, USA, V. MORENO et al.: "Degradation of bêta-casein by micrococcal cell-free preparations"**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention a pour objet un procédé destiné à améliorer l'aptitude fromagère du lait entrant dans la préparation des fromages à pâtes pressées non cuite ou demi-cuites ainsi que les fromages obtenus par ce procédé.

L'état de la technique mentionne l'addition de bactéries Micrococcus caseolyticus aux starters pour la fabrication de fromages de type Edam (CA.62-13 765 c). L'état de la technique décrit par ailleurs la préparation d'une enzyme à partir de Micrococcus caseolyticus ainsi que les propriétés protéolytiques de cet enzyme.

On sait maintenant que les progrès techniques realisés dans la récolte du lait, sa conservation à ferme à basse température, son transport en citernes et son stockage à la laiterie en récipients isothermes, ont des conséquences génantes sur la flore bactériologique dont l'activité est essentielle pour la production d'un fromage de qualité.

La conservation du lait à 4° C ou à une température supérieure a notamment pour effet de favoriser le développement de bactéries psychrotrophes qui produisent des enzymes nuisant à la qualité du fromage. La croissance de ces bactéries psychrotrophes se fait au détriment des autres flores qui produisent des peptides stimulant la croissance des bactéries lactiques indispensables à la préparation de fromages de bonne qualité.

La demanderesse a ainsi été amenée à rechercher différentes voies permettant de retrouver l'aptitude fromagère des laits d'autrefois.

Au cours de ces études elle a notamment trouvé que l'addition d'un extrait enzymatique d'une culture d'un Micrococcus caseolyticus améliorait considérablement l'aptitude fromagère du lait entrant dans la préparation des fromages à pâtes pressées non cuites ou demi-cuites.

L'invention a ainsi pour objet un procédé destiné à améliorer l'aptitude fromagère du lait entrant dans la préparation des fromages à pâtes pressées non cuites ou demi-cuites, fromages à croûte sèche dont l'extrait sec est compris entre 50 et 55%, caractérisé en ce qu'au cours de la préparation desdits fromages à pâtes pressées non cuites ou demi-cuites, l'on ajoute au lait un extrait enzymatique à activité protéolytique obtenu par centrifugation, précipitation du surnageant par le sulfate d'ammonium, reprise par une solution de chlorure de calcium, concentration par ultrafiltration et lyophilisation d'un bouillon de culture de Micrococcus caseolyticus I 194, à une dose comprise entre 25 et 250 U/1 de lait, l'activité protéolytique de l'extrait étant déterminée comme la quantité d'extrait qui agissant dans les conditions du dosage, provoque une variation de la densité optique à 275 nm de 0,001 unité de densité optique par minute par millilitre de solution.

L'addition au lait d'un extrait enzymatique d'une souche de Micrococcus caseolyticus répond particulièrement bien au problème posé puisqu'elle a pour effet d'une part de préparer ou de complémenter l'action de la présure en améliorant l'aptitude à la coagulation du lait et d'autre part de créer par coupure de la caséine, des peptides stimulant des bactéries lactiques. Grâce à cette addition d'enzyme, le fromager tend à retrouver un lait doué d'aptitude fromagère traditionnelle en reconstituant son processus de maturation biologique.

Selon l'invention, le fromage à pâte pressée non cuite ou demi-cuite est un fromage à croûte sèche dont l'extrait sec est compris entre 50% et 55%.

Par fromage à croûte sèche dont l'extrait sec est compris entre 50% et 55% on désigne notamment des fromages tels que le Gouda, le Saint-Paulin, l'Edam, la Tome, les fromages à pâtes persillées ...

Dans la mise en oeuvre du procédé, objet de l'invention, on a trouvé que la souche déposée dans la Collection Nationale de Cultures de Microorganisme (CNCM) à l'Institut Pasteur à Paris sous le n° I. 194 en date du 28 Avril 1982 était particulièrement avantageuse.

Cette souche est identique à la souche déposée dans la collection du CNRZ (Centre National de Recherches Zootechniques à Jouy en Josas – France) sous le n° 467 qui a par ailleurs été déjà décrite dans la littérature.

Le procédé objet de l'invention est donc caractérisé en ce que la souche de Micrococcus caseolyticus est constituée par la souche déposée à l'Institut Pasteur sous le n°I. 194.

Selon l'invention, l'addition d'un extrait enzymatique dans la préparation des fromages à pâtes pressées non cuites ou demicuites a pour effet d'augmenter et de régulariser la protéolyse en conférant à ces fromages une meilleure texture.

Cette addition d'extrait enzymatique a principalement pour effet d'améliorer la texture de la pâte, de prolonger la pédiode de commercialisation bien au-delà de la durée usuelle, sans apporter d'amertume comme peuvent le faire certaines enzymes.

Dans des conditions préférentielles de mise en oeuvre du procédé objet de l'invention, l'addition d'extrait enzymatique est effectuée à une dose comprise entre 70 et 150 U/1 de lait.

L'enzyme améliorant l'aptitude à la coagulation du lait, la dose optimale est celle qui diminue le temps de prise de 3 à 5 minutes. Cette dose, variable en fonction des qualités de laits et des fromages à préparer, se situe le plus souvent aux environs de 100 u/litre.

L'activité protéolytique de l'extrait est déterminée par mesure (variation de la densité optique à 275 nm) de la quantité de caséine hydrolysée par l'enzyme (fraction azotée non précipitable par l'acide trichloracétique) dans des conditions standard.

Une unité est définie comme la quantité d'extrait qui agissant dans les conditions du dosage, provoque une variation de la densité optique à 275 nm de 0,001 unité de densité optique par minute par millilitre de solution.

Selon le procédé objet de l'invention, l'addition de l'extrait est effectuée avant ou pendant l'emprésurage.

Cette addition d'extrait enzymatique est de préférence effectuée de 15 à 30 minutes avant l'emprésurage dans les cas où la température du lait est égale ou supérieure à 35°C.

Dans le cas où la température d'emprésurage n'est que de l'ordre de 30 à 32°C, température moins favorable à l'activité de l'extrait, celle-ci doit être introduite au moins 40 minutes avant l'emprésurage.

Dans les cas où la technique de fabrication des fromages ne permet pas de préserver ce temps de contact préalable, l'extrait enzymatique peut être introduite dans le tank de prématuration du lait, dès la veille du jour de fabrication (lait à une température généralement comprise entre 10 et 16°C, ou dans le tank de stockage (lait à 4°C) quand la technique de prématuration n'est pas utilisée.

Une autre technique peut être appliquée dans les cas où les laits des tanks subissent une pasteurisation (72°C) ou une thermisation (63°C) juste avant la mise en route de la fabrication des fromages. Pour éviter que l'enzyme ne soit partiellement ou totalement détruite par la chaleur, la technique consiste à diluer la quantité totale d'enzyme à utiliser pour le traitement par exemple d'une cuve de 10 000 litres soit 700 000 à 1 500 000 U, dans 1 litre de lait stérile, la veille de la fabrication du fromage, cette prédilution ou préparation enzymatique étant laissée à la température ambiante soit environ 20°C.

La préparation enzymatique est ensuite versée dans la cuve de fabrication au début du remplissage.

Cette technique a pour conséquence l'hydrolyse totale de la caséine contenue dans le litre de lait, soit environ 26 g, donnant ainsi une quantité équivalente de peptides stimulantes supplémentaires venant renforcer l'action normale de l'enzyme qui sera restée intacte dans la préparation.

Selon une variante du procédé objet de l'invention, l'addition d'enzyme est effectuée au cours du brassage.

La technique de préparation des fromages à pâtes pressées non cuites ou demi-cuites étant bien connue en elle-même, les exemples figurant plus loin dans la partie expérimentale ne sont donnés que pour illustrer l'addition de l'extrait enzymatique de Micrococcus caséolytique.

Il convient de noter que le procédé selon l'invention peut être mis en oeuvre aussi bien au départ du lait naturel entier, qu'au départ de laits reconstitués, recombinés ou ultrafiltrés.

Les procédés par ultrafiltration ne sont pas sans inconvénients pour l'obtention d'un fromage de qualité. En effet, en retenant la totalité des protéines et des sels minéraux dont une partie était auparavant perdue avec le sérum, l'ultrafiltration contribue à l'obtention d'un fromage plus difficile à affiner et au changement de ses caractéristiques organoleptiques.

L'addition d'extrait enzymatique de Micrococcus caséolyticus permet de pallier à ces inconvénients majeurs.

L'invention a enfin pour objet les fromages à pâtes presées non cuites ou demi-cuites tels qu'obtenus au moyen du procédé décrit ci-dessus.

L'extrait enzymatique de Micrococcus caséolyticus utilisé dans la mise en oeuvre du procédé selon l'invention peut, par exemple être préparée selon la technique décrite dans Ann. Biol. anim. Bioch. Biophys., 1970, 10 (3) 413-430.

L'extrait enzymatique de Micrococcus caséolyticus peut être préparée au départ d'un bouillon de culture de Micrococcus caseolyticus, par centrifugation dudit bouillon pour en éliminer les bactéries, précipitation de l'enzyme par le sulfate d'ammonium, reprise de celle-ci par une solution de chlorure de calcium et concentration par ultrafiltration suivie d'une lyophilisation.

Un exemple d'une telle préparation est donné ci-après:

Préparation du bouillon de fermentation:

Dans un fermenteur, on stérilise à 120° C une solution préparée à partir de 750 l d'eau, 20 kg de corn steep liquide, 20 kg de peptone de caséine, 10 kg d'autolysat de levure et 0,906 kg de chlorure de calcium, solution dont le pH a été ajuste à 7 par addition de lessive de soude. On amène la température du milieu stérile à 30° C puis introduit 15 litres d'une solution stérile de dextrose à 30% et 10 litres de bouillon pied de cuve d'une culture de Micrococcus caseolyticus (souche déposée à l'institut Pasteur à Paris sous le n°l. 194).

On laisse fermenter pendant 24 heures à 30°C, sous agitation et air stérile en maintenant le pH constant pendant les 10 premières heures. Après 24 heures, on recueille 1050 litres de bouillon brut de fermentation.

Extraction de l'enzyme:

On sépare par centrifugation sur centrifugeuse Alfa-Laval type LX, les bactéries contenues dans 5000 litres d'un bouillon de culture préparé comme indiqué ci-dessus et recueille 4770 litres de centrifugeat limpide.

Au centrifugeat obtenu, on ajoute 2670 kg de sulfate d'ammonium puis, après agitation pendant 30 minutes 1,2 kg d'Hyflosupercel. On laisse reposer 24 heures puis élimine le surnageant.

On introduit la fraction insoluble obtenue ci-dessus dans 330 litres d'une solution de chlorure de calcium, agite 15 mn et filtre. On recueille 390 litres d'une solution que l'on concentre par ultrafiltration. Après 12 heures on obtient 50 litres d'une solution concentrée d'enzyme titrant 50500 unités/cm3.

La solution concentrée d'extrait enzymatique est alors répartie en flacons de 24 cm3 et lyophilisée.

Il va être donné maintenant à titre non limitatif, des exemples de mise en œuvre de l'invention.

Exemple 1
Fabrication de fromage de type «Gouda»
On ensemence avec des ferments congelés (levain) 100 litres de lait entier préalablement pasteurisé à 72° C pendant 20 mn. On effectue une maturation pendant 16 heures à 11–12° C puis introduit l'enzyme extraite de la souche de Micrococcus caseolyticus (déposée à l'Institut Pasteur à Paris sous le n°I. 194), à la dose de 90 Unités par litre de lait. Quinze minutes après, on effectue l'emprésurage.

Après coagulation, on élimine le sérum, effectue un premier brassage puis un traitement thermique à 40°C. On délactose partiellement le caillé par addition d'eau et effectue un second brassage. On recueille le caillé égoutté, effectue un moulage et un pressage selon les techniques usuelles.

On enrobe alors les fromages de cire et effectue l'affinage à 12° C à 95% d'humidité relative pendant 90 jours.

On obtient finalement des fromages de 250 g de type «Gouda».

Simultanément à la préparation ci-dessus, on a préparé par la même technique, des fromages sans addition d'enzyme.

Ces essais ont montré que la texture des fromages «traités» étaient beaucoup plus régulière que celle des fromages «témoins».

Exemple 2

Etude de l'action de l'enzyme

Afin d'étudier l'action de l'enzyme lors de la préparation des fromages à pâtes pressées non cuites ou demi-cuites, selon l'invention, on a voulu rechercher l'action de celle-ci en augmentant considérablement la dose utilisée. Pour cette étude on a utilisé le protocole suivant:

On ensemence avec des ferments congelés (levain) 87 litres de lait entier préalablement pasteurisé à 72° C pendant 20 mn. On effectue une maturation pendant 16 heures à 11–12° C puis ajoute 45 000 unités d'enzyme extraite de la souche Micrococcus caseolyticus déposée à l'Institut Pasteur à Paris sous le n°I. 194 (correspondant à environ 520 u/litre de lait). Quinze minutes après, on effectue l'emprésurage.

Après coagulation, on élimine le sérum, effectue un premier brassage puis un traitement thermique à 40° C. On délactose partiellement le caillé par addition d'eau et effectue un second brassage. On recueille le caillé égoutté, effectue un moulage et un pressage selon les techniques usuelles.

On enrobe alors les fromages de cire et effectue un affinage à 12° C à 95% d'humidité relative. On effectue des prélèvements de fromages à différentes périodes au cours de l'affinage.

On obtient finalement des fromages de 250 g environ de type «Gouda».

Simultanément à la préparation ci-dessus, on a préparé par la même technique des fromages sans addition d'enzyme.

Analyse sensorielle:

Les fromages «traités» et les fromages «témoins» ont été soumis à l'analyse d'un jury de dégustation entraîné constitué de 16 personnes.

La texture a été appréciée selon 4 caractères notés chacun de 0 à 4: dur, friable, glissant, onctueux. La flaveur a été appréciée selon 17 caractères notés chacun de 0 à 4 et dont les principaux étaient: amer, acide, piquant, degré d'affinage.

Aucun défaut d'amertume n'a pu être détecté dans les fromages «traités» au cours des 90 jours d'affinage. Pour les autres caractères de flaveur testés, aucune différence significative n'a été observée si ce n'est au niveau de l'appréciation du degré d'affinage (les fromages «traités» étant considérés comme plus affinés en fin de maturation).

Au niveau de la texture, les fromages traités ont été considérés comme plus «friables» après 28 jours de maturation et «moins durs» après 90 jours de maturation.

Mesures de texture:

Les variations de texture dans les fromages «traités» et «témoins» au cours de la période d'affinage ont été appréciées par des tests de fluage réalisés à l'aide d'un appareil décrit dans: «Le Lait» 56, 486–494.

Le «module de viscosité» et le «module d'élasticité» ont été mesurés sur des éprouvettes cylindriques (diamètre 2 cm – Hauteur 2 cm).

Les mesures rhéologiques ont révélé une nette différence dans l'évolution de la texture.

Pour les fromages «témoins», le module d'élasticité a augmenté régulièrement au cours de l'affinage. Pour les fromages «traités», une augmentation plus faible a été observée jusqu'au 50 ème jour, puis une diminution a été constatée ensuite jusqu'au 90ème jour.

Pour les fromages «témoins», le module de viscosité a augmenté fortement entre le 1er et le 14ème jour, puis plus lentement par la suite. Pour les fromages «traités», l'évolution du module de viscosité, a été analogue à celle des fromages «témoins» jusqu'au 14ème jour. Une nette diminution a été observée au 24ème jour puis une lente augmentation ensuite jusqu'à la fin de l'affinage.

En conclusion, cette étude montre que l'addition de l'enzyme de Micrococcus caseolyticus à une dose très supérieure à la dose normale d'utilisation se traduit par une protéolyse plus importante des fromages qui n'est pas accompagnée d'amertume contrairement à ce qui a pu être constaté avec d'autres enzymes.

**Revendications pour les Etats contractants: BE, CH, DE, FR, GB, IT, LI, WL, SE**

1. Procédé destiné à améliorer l'aptitude fromagère du lait entrant dans la préparation des fromages à pâtes pressées non coites ou demi-cuites, fromages à croûte sèche dont l'extrait sec est compris entre 50 et 55%, caractérisé en ce qu'au cours de la préparation desdits fromages à pâtes pressées non cuites ou demi-cuites, l'on ajoute au lait un extrait enzymatique à activité protéolytique obtenu par centrifugation, précipitation du surnageant par le sulfate d'ammonium, reprise par une solution de chlorure de calcium, concentration par ultrafiltration et lyophilisation d'un bouillon de culture de Micrococcus caséolyticus I 194, à une dose comprise entre 25 et 250 U/1 de lait, l'activité protéolytique de l'extrait étant déterminée comme la quantité d'extrait qui agissant dans les conditions du dosage, provoque une variation de la densité optique à 275 nm de 0,001 unité de densité optique par minute par millilitre de solution.

2. Procédé selon la revendication 1, caractérisé en que l'addition de l'extrait enzymatique est effectuée à une dose comprise entre 70 et 150 U/1 de lait.

3. Fromages à pâtes pressées non cuites ou demi-cuites, tels qu'obtenus au moyen du procédé décrit à l'une quelconque des revendications 1 ou 2.

**Revendications pour l'Etat contractant: AT**

1. Procédé destiné à améliorer l'aptitude fromagère du lait entrant dans la préparation des fromages à pâtes pressées non cuites ou demi-cuites, fromages à croûte sèche dont l'extrait sec est compris entre 50 et 55%, caractérisé en ce qu'au cours de la préparation desdits fromages à pâtes pressées non cuites ou demi-cuites, l'on ajoute au lait un extrait enzymatique à activité protéolytique obtenu par centrifugation, précipitation du surnageant par le sulfate d'ammonium, reprise par une solution de chlorure de calcium, concentration par ultrafiltration et lyophilisation d'un bouillon de culture de Micrococcus caséolyticus I 194, à une dose comprise entre 25 et 250 U/1 de lait, l'activité protéolytique de l'extrait étant déterminée comme la quantité d'extrait qui agissant dans les conditions du dosage, provoque une variation de la densité optique à 275 nm de 0,001 unité de densité optique par minute par millilitre de solution.

2. Procédé selon la revendication 1, caractérisé en ce que l'addition de l'extrait enzymatique est effectuée à une dose comprise entre 70 et 150 U/1 de lait.

**Patentansprüche für den Vertragsstaat AT**

1. Verfahren zur Verbesserung der Käsetauglichkeit von Milch, die in die Herstellung von Käse aus nichtgekochten oder halbgekochten Pressmassen, Käse mit trockener Rinde, dessen Trockenextrakt zwischen 50 und 55% beträgt, eingeht, dadurch gekennzeichnet, dass man im Verlauf der Herstellung von diesem Käse aus nichtgekochten oder halbgekochten Pressmassen zu der Milch einen Enzymextrakt mit proteolytischer Aktivität, erhalten durch Zentrifugieren, Ausfällen des Überstands mit Ammoniumsulfat, Wiederaufnahme mit einer Calciumchloridlösung, Einengen durch Ultrafiltration und Lyophilisieren einer Kulturbrühe von Micrococcus caseolyticus I 194, in einer Dosis zwischen 25 und 250 E/l Milch zugibt, wobei die proteolytische Aktivität des Extrakts als die Extraktmenge bestimmt wird, die unter den Bestimmungsbedingungen eine Änderung der optischen Dichte bei 275 nm von 0,001 Einheiten optischer Dichte je Minute je Milliliter Lösung herbeiführt.

2. Verfahren gemäss Anspruch 1, dadurch gekennzeichnet, dass die Zugabe des Enzymextrakts in einer Dosis zwischen 70 und 150 E/l Milch erfolgt.

**Patentansprüche für die Vertragsstaaten BE,CH,DE,FR,GB,IT,LI,NL,SE.**

1. Verfahren zur Verbesserung der Käsetauglichkeit von Milch, die in die Herstellung von Käse aus nichtgekochten oder halbgekochten Pressmassen, Käse mit trockener Rinde, dessen Trockenextrakt zwischen 50 und 55% beträgt, eingeht, dadurch gekennzeichnet, dass man im Verlauf der Herstellung von diesem Käse aus nichtgekochten oder halbgekochten Pressmassen zu der Milch einen Enzymextrakt mit proteolytischer Aktivität, erhalten durch Zentrifugieren, Ausfällung des Überstands mit Ammoniumsulfat, Wiederaufnahme mit einer Calciumchloridlösung, Einengung durch Ultrafiltration und Lyophilisieren einer Kulturbrühe von Micrococcus caseolyticus I 194, in einer Dosis zwischen 25 und 250 E/l Milch zugibt, wobei die proteolytische Aktivität des Extrakts als die Extraktmenge bestimmt wird, die unter den Bestimmungsbedingungen eine Änderung der optischen Dichte bei 275 nm von 0,001 Einheiten optischer Dichte je Minute je Milliliter Lösung herbeiführt.

2. Verfahren gemäss Anspruch 1, dadurch gekennzeichnet, dass die Zugabe des Enzymextrakts in einer Dosis zwischen 70 und 150 E/l Milch erfolgt.

3. Käse aus nichtgekochten oder halbgekochten Pressmassen, erhalten nach einem Verfahren gemäss einem der Ansprüche 1 oder 2.

**Claims for the Contracting State AT**

1. Process intended to increase the aptitude for cheese making of the milk used in the preparation of cheeses with uncooked or halfcooked pressed pastes, cheeses with a dry crust, the dried extract of which ist between 50% and 55%, characterized in that during the preparation of the said cheeses, with uncooked or half-cooked pressed pastes, there ist added to the milk at a dosage between 25 and 250 u/l of milk an enzyme extract with proteolytic activity obtained by centrifuging, precipitating the supernatant by ammonium suhphate, taking up by a solution of calcium chloride, concentrating by ultrafiltration and lyophilisation of a bouillon of Micrococcus caseolyticus I 194 culture, the proteolytic activity of the extract being determined as the quantity of extract which acting in the conditions of the dosage, causes a variation of the optical density a 275 nm of 0.001 optical density units per minute per millilitre of the solution.

2. Process according to claim 1, characterized in that the enzyme extract ist added at a dosage between 70 and 150 u/l of the milk.

**Claims for the Contracting States BE, CH, DE, FR,GB, IT, LI, NL, SE**

1. Process intended to increase the aptitude for cheese making of the milk used in the preparation of cheeses with uncooked or halfcooked pressed pastes, cheeses with a dry crust, the dried extract of which is between 50% and 55%, characterized in that during the preparation of the said cheeses, with uncooked or half-cooked pressed pastes, there ist added to the milk at a dosage between 25 and 250 u/l of milk, an enzyme extract with proteolytic activity obtained by centrifuging, precipitating the supernatant by ammonium suhphate, taking up by a solution of calcium chloride, concentrating by ultrafiltration and lyophilisation of a bouillon of Micrococcus caseolyticus I 194 culture, the proteolytic activity of the extract being determined as the quantity of extract which acting in the conditions of the dosage, causes a variation of the optical density at 275 nm of 0.001 optical density units per minute per millilitre of the solution.

2. Process according to claim 1, characterized in that the enzyme extract is added at a dosage between 70 and 150 u/l of the milk.

3. Cheeses with uncooked or half-cooked pressed pastes as obtained by means of the process described in any one of the claims 1 or 2.